# EUROPÄISCHE PATENTANMELDUNG

(11) **EP 1 624 212 A1**
(43) Veröffentlichungstag der Anmeldung: **08.02.2006**
(21) Anmeldenummer: 05016253.6
(22) Anmeldetag: 27.07.2005
(51) Int. Cl.: F16D 23/06

(54) **Synchronisiereinrichtung**

(30) Priorität: 28.07.2004 DE 102004036507
(71) Anmelder: DaimlerChrysler AG, 70567 Stuttgart (DE)
(72) Erfinder: Wefers, Christoph, 73666 Baltmannsweiler (DE); Wieland, Dittmar, 71570 Oppenweiler (DE); Zinsser, Joachim, 73269 Hochdorf (DE)

(57) **Zusammenfassung**

Die Erfindung betrifft eine Synchronisiereinrichtung. Um eine kompakte und kostengünstige Synchronisiereinrichtung zu schaffen, welche Klapper- bzw. Rasselgeräusche infolge von Antriebsstrangschwingungen im Getriebe verhindert, wird vorgeschlagen, einen Ausgleichshebel (5) schwenkbar um die Zentralachse (15) des Druckstückes (20) zu platzieren.

## Beschreibung

Die Erfindung betrifft eine Synchronisiereinrichtung gemäß dem Oberbegriff von Patentanspruch 1.

Aus der DT 24 31 324 B1 ist bereits eine Synchronisiereinrichtung mit einen Synchronkörper, einer Schaltmuffe, zwei Synchronringen, einem Druckstück, einer Druckfeder, einem Rastkörper und einem schwenkbeweglichen Ausgleichshebel bekannt. Der Ausgleichshebel ist mit jedem von dessen beiden Enden in Umfangsrichtung beidseitig an dem jeweiligen Synchronring abgestützt. Der Ausgleichshebel wirkt somit als Waagebalken zwischen den beiden Synchranringen und soll bei Drehschwingungen der Synchronisiereinrichtung verhindern, dass Anschläge der Reibringe hart anschlagen.

Ferner sind aus der DT 26 28 039 B1 Blattfedern zwischen dem Synchronkörper und dem Synchronring bekannt.

Aus der DE 32 08 979 A1 sind Federn als Verdrehanschläge für Synchronringe bekannt.

Aufgabe der Erfindung ist es, eine kompakte und kostengünstige Synchronisiereinrichtung zu schaffen, welche Klapper- bzw. Rasselgeräusche infolge von Antriebsetrangechwingungen im Getriebe verhindert.

Diese Aufgabe wird erfindungsgemäß mit den Merkmalen von Patentanspruch 1 gelöst.

Antriebsstrangschwingungen entstehen im besonderen Maße beim
- Wechseln des Ganges,
- Einkuppeln,
- Auskuppeln,
- Anlassen des Antriebsmotors,
- Stillsetzen des Antriebsmotors,
- Ungewollten Stillsetzten - "Abwürgen" - des Antriebsmotors,
- Motorbetrieb im Leerlauf,
- untertourigen Fahren und
- untertourigen Beschleunigen

Ferner regen insbesondere aufgeladene und/oder Dieselmotoren Antriebsstrangschwingungen an, da diese Motoren hohe Drehzahlungleichförmigkeiten zeigen.

Erfindungsgemäß ist ein Ausgleichshebel in vorteilhafter Weise schwenkbar zwischen den beiden Synchronringen angeordnet. Damit wird die funktionsnotwendige Verdrehbarkeit der beiden Synchronringe gegenüber dem Synchronkörper aufrecht erhalten. Bei Drehbeschleunigungen der beiden Synchronringe infolge von Antriebastrangschwingungen stützen sich jedoch beide Synchronringe in der gleichen Umfangsrichtung an dem prinzipiell als Waagebalken ausgeführten Ausgleichshebel ab. Somit werden die beiden Synchronringe daran gehindert, in Umfangsrichtung beschleunigt zu werden und an einem synchronisierungsprinzipbedingten Anschlag hart anzuschlagen. Da somit der Ausgleichshebel die Drehbeweglichkeit zumindest bei gleichgerichteter Drehbeschleunigung der Synchronringe begrenzt, kann der Ausgleichshebel in einer besonders vorteilhaften Ausgestaltung auch derart ausgeführt sein, dass er die Drehbewegung der beiden Synchronringe in entgegengesetzt Drehrichtungen begrenzt. In diesem Fall kann auf einen weiteren Anschlag der Synchronringe gegenüber dem Synchronkörper verzichtet werden.

Insbesondere für die Verwendung bereits bewährter Synchronisiereinrichtungen bietet sich jedoch die Kombination von Ausgleichshebel und zusätzlichem Anschlag an.

Infolge der gemeinsamen Anordnung des Ausgleichshebels und des Druckstücks in einem Bereich ist der Bauraumbedarf für diese beiden Einheiten sehr gering.

In besonders vorteilhafter Weise können das Druckstück und der Ausgleichshebel sogar als vormontierte Baueinheit ausgeführt sein. Die Verliersicherheit bzw. Montagesicherheit kann noch weiter verbessert werden, indem auch die Druckfeder und der Rastkörper ebenfalls verliersicher dieser Baueinheit zugeordnet werden.

Da es zwangsläufig zur Reibung und hohen Biegebelastung des Ausgleichshebels kommt, kann dieser in besonders vorteilhafter Weis aus nichtmetallischen Werkstoffen mit/ohne Verstärkung oder aus metallischen Werkstoffen gefertigt sein.

In besonders kompakter, montagefreundlicher und kostengünstiger Weise kann die Synchronisiereinrichtung einteilig mit dem Ausgleichshebel ausgeführt sein und gerundete Seitenflächen aufweist, die ein Schwenken des Druckstückes zulassen.

Weitere Vorteile der Erfindung gehen aus den weiteren Patentansprüchen, der Beschreibung und der Zeichnung vor.

Die Erfindung ist nachfolgend anhand von zwei Ausführungabeispielen erläutert.

Dabei zeigen:
- Fig. 1: ein Detail einer Synchronisiereinrichtung, welche einen Synchronring, einen Synchronkörper und ein Druckstück mit einem Ausgleichshebel umfasst,
- Fig. 2: eine weitere Detailansicht in einem Schnitt welcher durch eine Rotationsachse einer Getriebewelle und einer Zentralachse des Druckstückes aus Fig. 1 verläuft,
- Fig. 3: das Druckstück aus Fig. 1 in einer Einzelansicht,
- Fig. 4: das besagte Druckstück in einem Schnitt durch die Zentralachse und
- Fig. 5: eine weitere Ausführungsform des Druckstückes, wobei das Druckstück und der Ausgleichshebel einteilig sind, so dass zwei Funktionen in einem einzigen Bauteil vereinigt werden.

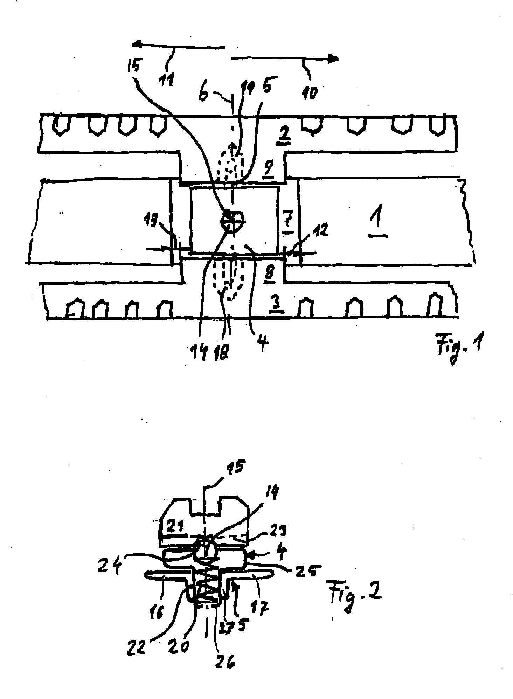

Zwei Synchronringe 2, 3, ein Synchronkorper 1, ein Druckstück 4 und ein Ausgleichshebel 5 gemäß dem Detail Fig. 1 finden Anwendung in einer Synchronisiereinrichtung. Diese Synchronisiereinrichtung kann insbesondere als Einkonussynchronisiereinrichtung nach dem System Borg-Warner ausgeführt sein, wie eine solche beispielsweise in "G. Lechner, Fahrzeuggetriebe, Springer-Verlag Berlin Heidelberg, 1994, Seite 238 bis Seite 241" erläutert ist. Ebenso kann die hier beschriebene Synchronisiereinrichtung Anwendung bei einer Mehrfach-Synchronisiereinrichtung finden. Dies kann beispielsweise eine Doppel- oder eine 3-fach-Synchronisiereinrichtung sein. Der Inhalt der zuvor genannten Druckschrift soll zur Erläuterung der dem Fachmann hinlänglich bekannten Einkonussynchronisiereinrichtung nach dem System Borg-Warner als aufgenommen gelten.

Fig. 1 zeigt das Detail in einer Abwicklung, die umfangsmäßig um eine Rotationsachse 6 einer hier nicht näher dargestellten Getriebewelle erfolgt. Diese Rotationsachse 6 fällt zusammen mit der Rotationsachse 6 der Synchronisiereinrichtung, der beiden Synchronringe 2, 3 und des Synchronkörpers 1.

Koaxial und drehfest zur Getriebewelle ist der Synchronkörper 1 angeordnet. Dieser weist umfangsmäßig mehrere Nuten 7 auf, die sich parallel zur Rotationsachse 6 erstrecken. In jeder der Nuten 7 greifen beidseitig zwei Anschlagnasen 8, 9 von den Synchronringen 2, 3 ein. Damit sind beide Synchronringe 2, 3 in beide Umfangsrichtungen 10, 11 um ein Verdrehepiel 12 bzw. 13 begrenzt drehbeweglich gegenüber dem Synchronkörper 1.

Zwischen den beiden Anschlagnasen 8, 9 liegt das Druckstück 4. Dieses Druckstück 4 weist eine Rastkugel 14 auf, die auf einer Zentralachse 15 des Druckstückes liegt, welche senkrecht auf der besagten Rotationsachse 6 steht und in Fig. 2 besser ersichtlich ist. Der Ausgleichshebel 5 ist schwenkbar um diese Zentralachse 15 angeordnet. Die beiden Arme 16, 17 des Ausgleichshebels 5 greifen jeweils in eine Bohrung 18 bzw. 19 einer der beiden Anschlagnasen 8 bzw. 9. Die beiden fluchtende Bohrungen 18, 19 fluchten miteinander und liegen parallel zur besagten Rotationsachse 6 der Getriebewelle.

Fig. 2 zeigt eine weitere Detailansicht in einem Schnitt in einer Ebene welcher zwischen der Rotationsachse 6 der Getriebewelle und einer Zentralachse 15 des Druckstückes 4 aus Fig. 1 aufgespannt wird. Dabei ist ersichtlich, dass das Druckstück 4 mitsamt der Rastkugel 14, einer Schraubendruckfeder 20 zum Anpressen der Rastkugel 14 an eine Schaltmuffe 21, einem Federführungszylinder 22 und dem Ausgleichshebel 5 zu einem montagefreundlichen und kompakten gemeinsamen Bauteil zusammengefasst sind.

Die Schaltmuffe 21 ist in üblicher Weise entlang der Rotationsachse 6 der Getriebewelle verschieblich, um eines von zwei Zahnrädern mit der Getriebewelle drehzahlangeglichen zu koppeln. Dabei weist die Schaltmuffe 21 innenseitig in deren Innenverzahnung 23 im Bereich der Rastkugel 14 eine umfangsmäßige Nut 24 auf. Diese Nut 24 liegt bezüglich der besagten Rotationsachse 6 axial mittig in der Schaltmuffe 21, so dass die Rastkugel 14 die unbetätigte Schaltmuffe 21 in der Neutralstellung hält. Bei Axialverschieblung der Schaltmuffe 21 in eine der beiden möglichen entgegengesetzt zueinander liegenden Richtungen nimmt das Druckstück 4 den an der Anschlagnase 8 bzw. 9 anliegenden Synchronring 3 bzw. 2 mit.

Dabei ist ersichtlich, dass der Grundkörper des Druckstücks 4 ein Formteil ist, welches radial außen ein Quader 25 ist, in dem mittig die Rastkugel liegt, wobei sich dem Quader 25 radial innen der koaxial zur Zentralachse 15 ausgerichtete Federführungszylinder 22 anschließt. In diesem Federführungszylinder 22 liegt die Schraubendruckfeder 20 und stützt sich radial nach außen an der Rastkugel 14 ab. Radial innen stützt sich die Schraubendruckfeder 20 an einem Ringkragen 26 ab, der vom radial inneren Ende des Federführungszylinders 22 in Richtung auf die Zentralachse 15 gezogen ist.

Außenseitig ist ein Kunststoffspritzgussteil auf den Zylinder aufgesteckt, so dass dieses am Quader 25 anliegt. Dieses Kunatstoffspritzgussteil besteht im wesentlichen aus einer Hülse 27 und den beiden sich am äußeren Ende diametral von der Hülse 27 und voneinander weg streckenden Armen 16, 17, welche gemeinsam den Ausgleichshebel 5 bilden.

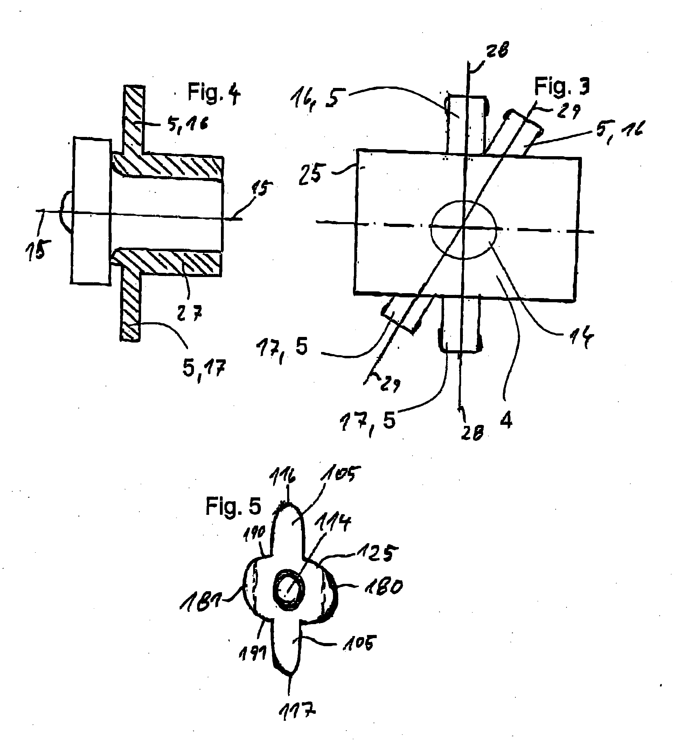

Fig. 3 zeigt das Druckstück 4 aus Fig. 1 in einer Einzelansicht. Der Ausgleichshebel 5 nimmt eine Nullage 28 ein, wenn auf beide Synchronringe 8, 9 nahezu die gleiche Drehbeschleunigung wirkt. In dieser Nullage 28 ist der Ausgleichshebel 5 parallel zur besagten Rotationsachse 6 ausgerichtet. Die ebenfalls in der selben Fig. 3 dargestellte Synchronlage 29 nimmt der Ausgleichshebel während des Synchronisiervorganges ein. Nachdem die Innenverzahnung der Schaltmuffe 21 eine formschlüssige Verbindung mit einer Schaltverzahnung des Zahnrades hergestellt hat, wird wieder die Nulllage 28 eingenommen. Der Ausgleichshebel kann dabei viele Synchronlagen einnehmen, von denen nur die eine Synchronlage 29 in der Zeichnung dargestellt ist.

Zwischen der Nulllage 28 und der Synchronlage 29 liegen ferner stufenlos beliebig viele Lagen, die der Ausgleichshebel 5 je nach Synchronisierphase einnimmt. Die Synchronisiereinrichtung ist dabei dergestalt dimensioniert, dass der Ausgleichshebel 5 in der Nulllage 28 - d.h. bei maximaler axialer Auslenkung - die Synchronringe nicht gegen die Gegenreibflächen drückt, so dass es auch nicht zu einer Vorsynchronisation kommt.

Fig. 4 zeigt das Druckstück 4 mit dem Kunststoffspritzgussteil in einer teilweise geschnittenen Ansicht, wobei der Schnitt durch die Zentralachse 15 verläuft und lediglich der Ausgleichshebel geschnitten dargestellt ist.

Fig. 5 zeigt in einer weiteren Ausführungsform der Synchronisiereinrichtung ein einteiliges Druckstück, bei welchem eine Aufnahme 125 der Rastkugel 114 bzw. eines Kugelbolzens und der Ausgleichshebel 105 als ein einstückiges Teil gefertigt werden. Dieses einstückige Teil kann
- sowohl aus nichtmetallischem Werkstoff beispielsweise als Kunststoffspritzgussteil
- als auch aus metallischem Werkstoff beispielsweise als Blechformteil
gefertigt sein. Da sich somit die Aufnahme 125 der Rastkugel 114 bzw. des Kugelbolzens gemeinsam mit dem Ausgleichshebel 105 verschwenkt, ist dieses Teil oval oder alternativ kreisrund ausgeformt. D.h. die Aufnahme 125 bzw. das Druckstück ist einteilig mit dem Ausgleichshebel ausgeführt und weist gerundete Seitenflächen 180, 181 auf. Die Anlagefläche zum Axialverschieben des Synchronringes kann dabei sowohl einer der Endbereiche 116, 117 der Arme, als auch einer der diametral zueinander liegenden Bereiche 190, 191 der Aufnahme 125 sein, an denen sich die Arme anschließen.

Bei der Synchronisiereinrichtung gemäß Fig. 4 kann zwischen der Hülse 27 und der Außenfläche des Federführungszylinders 22 sowohl eine Spielpassung, als auch eine leichte Pressung oder Übergangspassung vorgesehen sein. Ein Spiel schütz die Hülse 27 und den Federführungszylinder 22 vor Materialspannungen. Eine leichte Pressung bewirkt infolge der Vorspannung eine zusätzliche Reibung, die das Rasseln der Synchronringe 8, 9 zusätzlich dämpft. Die Wahl der Passung ist somit abhängig von der Materialwahl. Die Hülse 27 mit dem Ausgleichshebel 5 kann insbesondere auch aus einem Polyamid mit einem Glasfaseranteil von beispielsweise ca. 30% bestehen. Dieser Stoff weist eine besonders hohe Verschleißfestigkeit bei einer dennoch hohen Zähigkeit auf. Es sind auch andere - insbesondere höhere - Anteile der Faserverstärkung denkbar. Zur Erhöhung der Verschleißfestigkeit sind auch andere Faserwerkstoffe denkbar. Insbesondere sind auch hoch verschleißfeste Kohlefasern und Kevlarfasern denkbar. Es bieten sich für die Hülse und den Ausgleichshebel insbesondere Kunststoffe an, die eine Temperaturbeständigkeit im Bereich der auftretenden zulässigen Getriebeöltemperatur aufweisen. Bei der thermischen Belastung des Kunststoffes ist zu berücksichtigen, dass im Getriebe eine Reibungsverminderung durch das Getriebeöl erfolgt. Als Kunststoffe können sowohl Thermoplasten als auch Duroplasten Anwendung finden.

In Fig. 1 sind Bohrungen zur Aufnahme des Ausgleichshebels in Anschlagnasen dargestellt. Diese Bohrungen müssen nicht fluchten, sondern können auch in zwei Ebenen liegen. Anstelle der Bohrungen sind auch andere Ausnehmungen oder sogar Vorsprünge an den Synchronringen denkbar, an denen die Arme des Ausgleichshebels abgestützt sind. Das Ende des Umlenkhebels soll im Synchronring derart gelagert sein, dass beim Umschlag des Synahronringes sowohl dieses Ende relativ zum Ring, als auch der Umlenkhebel um seine Drehachse frei und ohne Verawängung beweglich sind.

Anstelle der Rastkugel können auch andere Federkraftbelastete Körper Anwendung finden, wie beispielsweise der Kugelbolzen gemäß "G. Lechner, Fahrzeuggetriebe, Springer-Verlag Berlin Heidelberg, 1994, Seite 239"

Eine Synchronisiereinrichtung kann mehrere Druckstücke aufweisen. Dabei kann nur eines oder zwei oder mehrere, insbesondere sämtliche Druckstücke einen Ausgleichshebel aufweisen.

Bei den beschriebenen Ausführungsformen handelt es sich nur um beispielhafte Ausgestaltungen. Eine Kombination der beschriebenen Merkmale für unterschiedliche Ausführungsformen ist ebenfalls möglich. Weitere, insbesondere nicht beschriebene Merkmale der zur Erfindung gehörenden Vorrichtungsteile, sind den in den Zeichnungen dargestellten Geometrien der Vorrichtungsteile zu entnehmen.

## Patentansprüche

1. Synchronisiereinrichtung mit einem Synchronkörper (1), einer Schaltmuffe (21) zum Koppeln des Synchronkörpers (1) mit einem Zahnrad, zwei Synchronringen (2, 3) zur Drehzahlangleichung zwischen dem Synchronköper (1) und Zahnrädern, einem Druckstück (4) und einer Druckfeder (20), die einen Rastkörper (14) des Druckstückes (4) gegen die Schaltmuffe (21) drückt und einem schwenkbeweglichen Ausgleichshebel (5), der mit jedem von dessen beiden Enden in Umfangsrichtung (10 bzw. 11) beidseitig an dem jeweiligen Synchronring (8 bzw. 9) abgestützt ist,
**dadurch gekennzeichnet,**
**dass** der Ausgleichshebel (5) um die Zentralachse (15) der Druckfeder (20) und/oder des Raetkörpers (14) schwenkbar ist.

2. Synchronisiereinrichtung nach Patentanspruch 1,
**dadurch gekennzeichnet,**
**dass** das Druckstück (4) ein Bleohformteil ist, welches eine Montageeinheit bildet, die die Druckfeder (20) und den Rastkörper (14) unverlierbar aufnimmt.

3. Synchronisiereinrichtung nach Patentanspruch 2,
**dadurch gekennzeichnet,**
**dass** das Blechformteil einen Zylinder (Federführungszylinder 22) aufweist, der in einer Andruckrichtung des Rastkörpers (14) ausgerichtet ist, wobei der Ausgleichshebel (5) schwenkbar auf diesen Zylinder (Federführungszylinder 22) aufgesteckt ist.

4. Synchronisiereinrichtung nach Patentanspruch 3,
**dadurch gekennzeichnet,**
**dass** der Rastkörper (14) mit Vorspannung auf den Zylinder (Federführungszylinder 22) des Blechformteils aufgesteckt ist.

5. Synchronisiereinrichtung nach einem der vorhergehenden Patentansprüche,
**dadurch gekennzeichnet,**
**dass** der Ausgleichshebel (5) einen faserverstärkten Kunststoffbereich aufweist.

6. Synchronisiereinrichtung nach einem der vorhergehenden Patentansprüche,
**dadurch gekennzeichnet,**
**dass** Arme (16, 17) des Ausgleichshebels (5) in Ausnehmungen (Bohrungen 18, 19) von Anschlagnasen (8, 9) eingreifen, welche in Nuten (3, 2) der beiden Synchronringe (2, 3) eingreifen, so dass beide Synchronringe (2, 3) in beide Umfangsrichtungen (10, 11) begrenzt drehbeweglich gegenüber dem Synchronkörper (1) sind.

7. Synchronisiereinrichtung nach einem der Patentansprüche 1 bis 5,
**dadurch gekennzeichnet,**
**dass** der Ausgleichshebel (5) den umfangsmäßigen Anschlag für die Synchronisiereinrichtung bildet.

8. Synchronisiereinrichtung nach einem der Patentansprüche 1 bis 2,
**dadurch gekennzeichnet,**
**dass** das Druckstück (Aufnahme 125) einteilig mit dem Ausgleichshebel (5) ausgeführt ist und gerundete Seitenflächen (180, 181) aufweist, die eine Schwenken des Druckstückes (Aufnahme 125) zulassen.
